# EUROPÄISCHE PATENTANMELDUNG

(11) **EP 0 716 201 A1**
(43) Veröffentlichungstag der Anmeldung: **12.06.1996**
(21) Anmeldenummer: 95116519.0
(22) Anmeldetag: 20.10.1995
(51) Int. Cl.: E05D 7/04, B60J 5/00

(54) **Schwenkbare Befestigung von Hauben, Türen oder Klappen an einer Karosserie, insbesondere für eine Heckklappe**

(30) Priorität: 09.12.1994 DE 4443816
(71) Anmelder: MERCEDES-BENZ AG, D-70327 Stuttgart (DE)
(72) Erfinder: Brokate, Karl-Heinz, D-28307 Bremen (DE); Meyer, Torsten, D-28357 Bremen (DE); Kück, Rainer, D-28870 Ottersberg (DE)

(57) **Zusammenfassung**

Die Erfindung betrifft eine schwenkbare Befestigung von Hauben, Türen oder Klappen an einer Karosserie, insbesondere von einer Heckklappe (1), mittels eines Paares von Scharnieren (2), von denen jeweils eines zwei über einen Scharnierbolzen (15) schwenkbar miteinander verbundene Scharnierlaschen umfaßt. Um trotz montierter Klappe, Haube, Türe oder ähnlicher schwenkbarer Karosserieteile eine vollständige und homogene Lackierung der gesamten Karosserie kostensparend und fertigungstechnisch unaufwendig erreichen zu können, wird vorgeschlagen, die klappenseitige Scharnierlasche (16) mit der Klappe (1) aufgrund einer entsprechenden Längenbemessung von der Lasche und der sich unterhalb der Außenfläche (10) der Klappe (1) und annähernd parallel zu dieser erstreckenden Anschlagfläche (29) in zwei unterschiedlichen quer zur Schwenkachse (17) versetzten Relativpositionen zwischen Klappe (1) und Scharnierlasche (16) zu verschrauben, wobei die Relativpositionen wenigstens um das Versatzmaß, um das die Schwenkachse des Scharnieres relativ zum Übergangsspalt zwischen Klappe und Öffnungsrand der zu verschließenden Karosserieöffnung in Richtung der Klappe hin versetzt ist, auseinanderliegen.

## Beschreibung

Die Erfindung betrifft eine schwenkbare Befestigung von Hauben, Türen oder Klappen an einer Karosserie, insbesondere für eine Heckklappe gemäß dem Oberbegriff des Patentanspruches 1.

Eine Befestigung der gattungsgemäßen Bauart ist aus der DE-OS 29 37 166 bekannt. Das dort beschriebene Scharnier weist eine Verstellvorrichtung auf, mit der das Scharnier derart ausrichtbar ist, daß die über diese verschwenkbare Heckklappe sich mit ihrer Außenseite bündig in die umgebende Karosserie einfügt. Nach dem Anschlagen des Scharniers und seiner Ausrichtung ist die Klappe zumindest im Bereich der Schwenkachse nur noch durch einen engen Spalt von der angrenzenden Karosserie beabstandet. Beim Verschwenken der Klappe taucht diese mit einem Randabschnitt, der integraler, zu lackierender Bestandteil der Klappe ist, in einen unterhalb des Spaltes liegenden Freiraum ab, in der die karosserieseitig befestigte Scharnierlasche angeordnet ist. Der Freiraum ist dabei in jeder Schwenkstellung der Klappe von diesem zumindest teilweise abgedeckt. Nach diesen Montage- und Justagearbeiten wird die Karosserie samt Klappe einer Sprühlackierung unterzogen, wobei jedoch durch die weitgehende Abdeckung des Freiraumes die ihn begrenzenden Karosseriewände nur sehr unvollständig lackiert werden, so daß die Lackierung dort nicht "schattenfrei" ist. Um diesen Mangel zu beseitigen ist natürlich denkbar, die Klappe abzumontieren, gesondert zu lackieren und dann wieder einzubauen. Dies erfordert wiederum eine neue Ausrichtung und ein Anschlagen der Klappe an der Karosserie und somit großen zusätzlichen Arbeitsaufwand. Desweiteren sind mit der gesonderten Lackierung auch weitere Fertigungslinien notwendig, was einen immensen Kostenaufwand bedeutet. Dazu kommen noch die Kosten für die Zuführung der lackierten Klappe zum Einbau in die Karosserie, wobei der Kostenanteil der dabei benötigten Logistik und der Steuerungstechnik beträchtlich ist.

Der Erfindung liegt die Aufgabe zugrunde, eine gattungsgemäße Befestigung dahingehend weiterzubilden, daß trotz montierter Klappe, Haube, Türe oder ähnlicher schwenkbarer Karosserieteile eine vollständige und homogene Lackierung der gesamten Karosserie kostensparend und fertigungstechnisch unaufwendig erreicht werden kann.

Die Aufgabe ist erfindungsgemäß durch die im Patentanspruch 1 angegebenen kennzeichnenden Merkmale gelöst.

Dank der Erfindung kann die jeweilige Klappe in vormontiertem Zustand an der Karosserie verbleiben ohne daß Lackierungsschatten an den Karosseriewänden des Freiraumes im Bereich des Öffnungsrandes der von der Klappe verschließbaren Karosserieöffnung, in dem das jeweilige Scharnier befestigt ist, beim Lackieren entstehen, so daß eine homogene und einheitliche Lackierung der gesamten Karosserie erreicht werden kann. Zum Lackieren wird dazu die Klappe in einfacher Weise an der klappenseitigen Scharnierlasche von einer arretierbaren Stellung in eine andere versetzt, welche letztere von der ersteren zumindest um das Versatzmaß auseinanderliegt, um das die Schwenkachse relativ zum Übergangsspalt zwischen Klappe und Öffnungsrand der Karosserieöffnung in Richtung der Klappe hin versetzt ist, wobei die erstere Stellung die Lage der Klappe in der Endmontage bzw. in der Vormontage definiert und somit näher zum Öffnungsrand gelegen ist. Dadurch wird die Klappe unter Verbreiterung des Übergangsspaltes so weit versetzt, daß der Freiraum abdeckungsfrei ist. Auch bei einer Verschwenkung der Klappe wird der Freiraum nicht abgedeckt, da der Klappenrand nicht in diesen abtauchen kann. Die Lackierung der Karosserie samt Klappe kann nun homogen und vollständig erfolgen. Die Möglichkeit der Versetzung der Klappe an der Scharnierlasche und deren Verschraubung erfordert nur geringfügigen fertigüngstechnischen Aufwand und ist gegenüber den bei separaten Lackiervorgängen von Flügel und Karosserie entstehenden hohen Kosten, sowie den dabei zu betreibenden, kostenintensiven Fertigungslinien von vernachlässigbarem Kostenaufwand. Desweiteren bei der erfindungsgemäßen Lösung vorteilhaft, daß die schon in der Vormontage auf Oberflächenbündigkeit und Spaltäquidistanz ausgerichtete Stellung der Klappe beim Versetzen der Klappe für den Lackiervorgang nicht beeinträchtigt wird, da sich die Position der Schwenkachse bzw. der karosserieseitigen Scharnierlasche nicht ändert, so daß - ohne nachzurichten - die Klappe nach dem Lackiervorgang exakt in die ausgerichtete Stellung zurückversetzt werden kann. Es ergibt sich aus der Erfindung außerdem vorteilig, daß die versetzte Stellung der Klappe in einer Schwenkstellung eine PVC-Nahtabdichtung der Beschnittkante des gefalzten Klappenrandes im Scharnierbereich nach der Tauchgrundierung jedoch vor dem Lackiervorgang in einfacher Weise ermöglicht.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 schematisch in einem seitlichen Längsschnitt einen Abschnitt einer Karosserieklappe mit einem erfindungsgemäß gestalteten schwenkbaren Befestigung in der Position bei der Rohbauphase bzw. Endmontage,
Fig. 2 schematisch in einem seitlichen Längsschnitt den Abschnitt der Karosserieklappe mit der Befestigung aus Fig. 1 in der für den Lackiervorgang vorgesehenen Stellung.

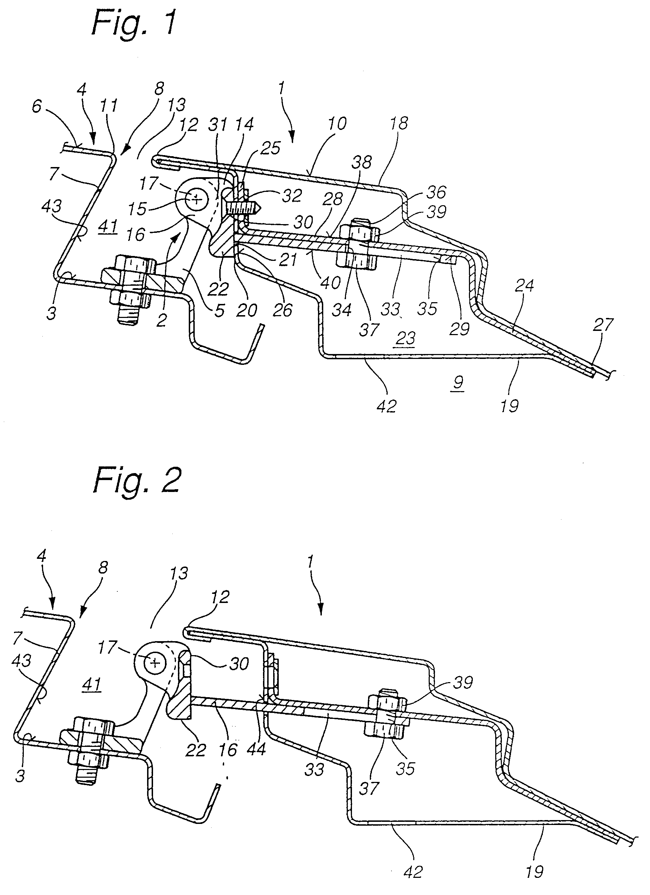

In Fig. 1 ist eine Heckklappe 1 eines Kraftfahrzeuges in vormontierter Gebrauchslage dargestellt, die mittels eines Paares von Scharnieren 2, von denen hier stellvertretend für beide nur eines gezeigt ist, an einer Anschlagfläche 3 der Karosserie 4 im Dachbereich mit einer winkelförmig ausgebildeten Scharnierlasche 5 angeschlagen ist. Die Anschlagfläche 3 ist von einer ebenen und parallel zur Dachaußenfläche 6 verlaufenden Abwinklung einer Abkantung 7 eines dachseitigen Öffnungsrandes 8 einer zu verschließenden Karosserieöffnung 9 gebildet.

Die Heckklappe 1 ist mit ihrer Außenfläche 10 oberflächenbündig zur Außenfläche 6 auf die Oberkante 11 des Öffnungsrandes 8 ausgerichtet, wobei sie mit ihrem Rand 12, der integraler, zu lakkierender Bestandteil der Klappe 1 ist, derart zum Öffnungsrand 8 beabstandet ist, daß ein umlaufender äquidistanter Übergangsspalt 13 zwischen Klappe 1 und Öffnungsrand 8 gebildet ist. Die Spaltbreite muß einerseits so groß sein, daß eine ungehemmte Schwenkbarkeit der Klappe 1 gewährleistet ist, und andererseits wiederum so klein bemessen sein, daß in Schließstellung der Klappe 1 optisch einheitliche, glatte Flächen in der Karosseriekontur erzielt werden.

Die Scharnierlasche 5 trägt an ihrem der Anschlagfläche 3 abgewandten Ende 14 einen Scharnierbolzen 15, über den die Lasche 5 mit einer Scharnierlasche 16, die auf dem Bolzen 15 drehbar angeordnet ist, schwenkbar verbunden ist. Die Schwenkachse 17 des Scharnieres 2 liegt dabei unterhalb der Außenfläche 10 der Klappe 1 nahe deren Randes 12 außerhalb des Bereiches des Übergangsspaltes 13 und parallel zur Oberkante 11 des Öffnungsrandes 8, wobei der Rand 12 die Schwenkachse 17 überragt.

Die Klappe 1 besteht aus einer Außenhaut 18 und einer Innenhaut 19, vorzugsweise aus einem Blechwerkstoff, die aneinander befestigt sind. Die Innenhaut 19 weist an einer in der vormontierten Gebrauchslage nahezu vertikalen Wandung 20 eine Durchführung 21 auf, durch die die eben ausgebildete Scharnierlasche 16 bis zu einem jeweils seitlich der Durchführung 21 und nach oben abragenden höckerförmigen Anschlag 22 durchgesteckt ist und mit diesem an der als Gegenanschlag wirkenden Außenfläche 44 der Wandung 20 anliegt.

Die Innenhaut 19 schließt mit der Außenhaut 18 einen Hohlraum 23 ein, der von einem mehrfach abgekanteten Profilteil 24 durchsetzt ist, welches mit einem Ende 25 an der Innenseite 26 der Wandung 20 der Innenhaut 19 im Bereich des Anschlags 22 angebracht ist. Mit dem anderen Ende 27 ist das Profilteil 24 an der Außenhaut 18 sowie der Innenhaut 19 bezüglich der Hohlraummitte diametral gegenüberliegend befestigt. Das Profilteil 24 bildet mit einem ebenen und annähernd parallel zur Außenfläche 10 der Klappe 1 verlaufenden Abschnitt 28 die Anschlagfläche 29 für die klappenseitige Scharnierlasche 16.

Der Anschlag 22 weist beiderseits der Durchführung 21 Schraubendurchgangslöcher 30 auf, durch die jeweils eine Senkschraube 31 zur genauen Fixierung der Heckklappe 1 am Scharnier 2 bei der Remontage gesteckt und in eine am Profilteil 24 vor dem Lackiervorgang in der Rohbauphase befestigte Mutternplatte 32 eingeschraubt ist, wodurch die Heckklappe 1 an der Scharnierlasche 16 lösbar befestigt ist. Mit dieser Befestigung über die Senkschrauben 31 wird verhindert, daß ein Klappergeräusche erzeugendes Gegenschlagen der Wandung 20 der Innenhaut 19 am Anschlag 22 des Scharnieres 2 und/oder Schmatzbewegungen der am Anschlag 22 liegenden Wandung 20 bei Eindringen von Feuchte auftreten.

Die Scharnierlasche 16 weist desweiteren ein Langloch 33 auf, das linear und senkrecht zur Schwenkachse 17 verläuft und dessen Ende 35 als Anschlag für eine mit ihrem Schaft 36 durch das Langloch 33 hindurchgesteckte Schraube 37 dient, die in eine auf der der Scharnierlasche 16 abgewandten Seite 38 des Profilteilabschnitts 28 angeschweißten Anschweißmutter 39 von der der Anschlagfläche 29 abgewandten Seite 40 der Lasche 16 aus fest eingeschraubt ist. Zwischen der scharnierseitigen, in der Rohbauphase sowie nach der Endmontage eingenommenen Endposition der Schraube 37 und dem anderen Ende 34 des Langloches 33 ist ein bestimmter Freigang vorgesehen, um in der Endmontage einen Formschluß des höckerförmigen Anschlages 22 und der Außenfläche 44 der Innenhautwandung 20 zu erreichen. Das Langloch 33 bildet dabei eine Schiebeführung für die Heckklappe 1, in der diese zwischen dem Ende 35 des Langloches 33 und der dem Ende 34 des Langloches 33 nahen Endposition verschoben werden kann, um die für den Ablauf des jeweiligen Fertigungsschritt benötigte Position einzunehmen.

Das der Schwenkachse 17 näher liegende Ende 34 des Langloches 33 ist derart von dieser entfernt, daß bei Einnahme der vom Ende 34 durch den Freigang beabstandeten Endposition durch die Schraube 37 in dieser Endposition der Übergangsspalt 13 - wie gewünscht - eng und äquidistant ist und dadurch der darunterliegende zwischen der Scharnierlasche 5 und dem Öffnungsrand 8 befindlichen Freiraum 41 von der Klappe 1 nahezu nach außen hin abgedeckt ist, wobei hierin die Gebrauchslage der Heckklappe 1 in der Phase der Vor- und Endmontage erreicht ist. Das Langloch 33 entspricht in seiner Länge dem Versatzmaß der Schwenkachse 17 des Scharnieres 2 relativ zum Übergangsspalt 13 in Richtung der Klappe 1 hin. Die Scharnierlasche 16 und die Anschlagfläche 29 sind in ihrer Länge dabei entsprechend bemessen.

Anstatt des Langloches 33 sind in einer vereinfachten Ausführung zwei um obiges Versatzmaß versetzte Schraubendurchgangslöcher denkbar, die an der Position des Endes 35 des Langloches 33 und an der scharnierseitigen Endposition nahe des Endes 34 des Langloches 33 angeordnet sind. Im übrigen kann die schwenkbare Befestigung auch an Hauben, Türen oder Deckeln der Fahrzeugkarosserie 4 vorgesehen sein.

Bevor der Lackiervorgang eingeleitet wird, wird die Schraube 37 über einen der Anschweißmutter 39 gegenüberliegenden Schlitz 42 oder eine anders gestaltete Durchgrifföffnung für einen Schraubenzieher in der Innenhaut 19 mittels eines Schraubendrehers gelockert und die Senkschrauben 31 gänzlich entfernt (Fig.2). Die Klappe 1 wird nun entlang der Scharnierlasche 16 im Langloch 33 bis zu dessen Ende 35 verschoben und dort wieder über die Schraube 37 an der Scharnierlasche 16 festgeschraubt.

Dabei wird der Übergangsspalt 13 im Bereich der Schwenkachse 17 des Scharnieres 2 so weit verbreitert, daß der Freiraum 41 völlig von außen zugänglich ist. Der Rand 12 der Klappe 1, der integraler zu lackierender Bestandteil der Klappe 1 ist, liegt nun derart, daß er bei einer Schwenkbewegung in den unterhalb des Übergangsspaltes 13 liegenden Freiraum 41 nicht mehr abtauchen kann. Die Wandungsfläche 43 der Abkantung 7 und die Anschlagfläche 3 des Öffnungsrandes 8 können nun lackiert werden, so daß eine über die gesamte Karosserie 4 "schattenfreie" einheitliche Lackierung erzielt wird.

Nach dem Lackieren wird die Schraube 37 wieder gelöst, die Klappe 1 in die ursprüngliche vormontierte Stellung zurückgeschoben und dort durch Anziehen der Schraube 37 sowie durch Einsetzen und Anziehen der Senkschrauben 31, die als Zusatz zur Schraube 37 zur Erhöhung der Haltekraft der Klappe 1 an der Scharnierlasche 16 und damit als Sicherung der von der Klappe 1 eingenommenen Position gegenüber eines ungewollten Verrutschens der Klappe 1 infolge eines fahrzeugvibrationsbedingten Lösens der Schraube 37 dienen und beim Anziehen die gegebenenfalls in geringem Maße quer zur Fahrzeuglängsrichtung verschobene Heckklappe 1 in ihre vorbestimmte Lage ziehen, arretiert.

## Patentansprüche

1. Schwenkbare Befestigung von Hauben, Türen oder Klappen an einer Karosserie, insbesondere von einer Heckklappe, mittels eines Paares von Scharnieren, von denen jeweils eines zwei über einen Scharnierbolzen schwenkbar miteinander verbundene Scharnierlaschen umfaßt, von denen eine Lasche karosserieseitig befestigt und eine Lasche klappenseitig an einer sich unterhalb der Außenfläche der Klappe und annähernd parallel zu dieser erstreckender Fläche angeschlagen ist, wobei die Klappe mit ihrer Außenfläche am Rand der zu verschließenden Karosserieöffnung oberflächenbündig in die Außenfläche der Karosserie unter Bildung eines umlaufenden äquidistanten Übergangsspaltes zwischen Öffnungsrand und Klappe übergeht, wobei der im Bereich der Schwenkachse sich erstreckende Rand des karosserieseitigen Klappenausschnittes integraler zu lackierender Bestandteil der Karosserie ist und wobei aufgrund der unterhalb der Außenfläche der Klappe liegenden, relativ zum Übergangsspalt in Richtung zur Klappe hin um ein Versatzmaß versetzt angeordneten Schwenkachse des Scharnieres der scharnierseitige Klappenrand bei einer Schwenkbewegung in einen unterhalb des Übergangsspaltes liegenden, karosserieseitigen Freiraum abtaucht,
**dadurch gekennzeichnet,**
daß die klappenseitige Scharnierlasche (16) mit der Klappe (1) aufgrund einer entsprechenden Längenbemessung von Lasche (16) und Anschlagfläche (29) in zwei unterschiedlichen quer zur Schwenkachse (17) versetzten Relativpositionen zwischen Klappe (1) und Scharnierlasche (16) verschraubbar ist, wobei die Relativpositionen wenigstens um das Versatzmaß, um das die Schwenkachse (17) des Scharnieres (2) relativ zum Übergangsspalt (13) in Richtung der Klappe (1) hin versetzt ist, auseinanderliegen.

2. Befestigung nach Anspruch 1,
**dadurch gekennzeichnet,**
daß die Klappe (1) an der klappenseitigen Scharnierlasche (16) schiebeführbar ist.

3. Befestigung nach Anspruch 1,
**dadurch gekennzeichnet,**
daß für die Schiebeführung in der klappenseitigen Scharnierlasche (16) ein Langloch (33) ausgebildet ist, das linear und senkrecht zur Schwenkachse (17) verläuft und dessen Enden (34,35) die beiden bedarfsweise einzunehmenden Relativpositionen zwischen Klappe (1) und Scharnierlasche (16) bezeichnen, und daß an der Anschlagfläche (29) eine Anschweißmutter (39) angebracht ist, in die eine das Langloch (33) durchragende Schraube (37) von der der Anschlagfläche (29) abgewandten Seite (40) der Lasche (16) aus eingeschraubt ist.

4. Befestigung nach Anspruch 1,
**dadurch gekennzeichnet,**
daß die Klappe (1) von einer Außen- und einer Innenhaut (18,19) gebildet ist, die miteinander einen Hohlraum (23) formen, und daß zwischen der Außen- und der Innenhaut (18,19) ein Profilteil (24) angeordnet ist, welches den Hohlraum (23) durchsetzt und mit einem ebenen und parallel zur Außenfläche (10) der Klappe (1) verlaufenden Abschnitt (28) die Anschlagfläche (29) für die klappenseitige Scharnierlasche (16) bildet.
